(19) Europäisches Patentamt
European Patent Office
Office européen des brevets

(11) **EP 4 517 467 A1**

(12) **EUROPEAN PATENT APPLICATION**

(43) Date of publication:
**05.03.2025   Bulletin 2025/10**

(21) Application number: **23194299.6**

(22) Date of filing: **30.08.2023**

(51) International Patent Classification (IPC):
**G05D 1/20** (2024.01)        **G06N 3/08** (2023.01)

(52) Cooperative Patent Classification (CPC):
**G06N 3/08; G06N 3/006; G06N 3/094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Industry Software NV**
**3001 Leuven (BE)**

(72) Inventors:
• **Pathrudkar, Sagar**
  **411041 Pune, Maharashtra (IN)**

• **Alirezaei, Mohsen**
  **5629NX Eindhoven (NL)**
• **Gielen, Ludo**
  **3010 Kessel-Lo (BE)**
• **Mukherjee, Saikat**
  **560102 Bangalore, Karnataka (IN)**
• **Indla, Vijaya Sarathi**
  **560032 Bangalore, Karnataka (IN)**

(74) Representative: **Isarpatent**
**Patent- und Rechtsanwälte**
**Barth Hassa Peckmann & Partner mbB**
**Friedrichstraße 31**
**80801 München (DE)**

(54) **MANAGING ADVERSARIAL AGENTS USED FOR TESTING OF AUTONOMOUS VEHICLES**

(57)      A system and method for managing one or more adversarial agents (404) used for testing of an autonomous vehicle is disclosed. The method comprises obtaining, by a processing unit (120), offline data for initializing the one or more adversarial agents from one or more first sources, wherein the offline data comprises at least one of real data and statistical simulation data. The method further comprises using a feedback-based learning algorithm to train one or more adversarial agents (404) based on the offline data and expert inputs received from a second source, wherein the one or more adversarial agents (404) are trainable computational models that model behavior of one or more entities that affect behavior of autonomous vehicles in a physical environment. The method further comprises deploying the trained adversarial agents (404) onto a test execution platform for testing of a system-under-test, wherein the system-under-test is associated with an autonomous vehicle-to-be-tested.

FIG 1A

**Description**

**Technical field**

The present disclosure relates to adversarial agents. More particularly, the present disclosure relates to a system and method for managing adversarial agents used for testing of autonomous vehicles.

**Background**

A crucial factor in the development and deployment of autonomous vehicles (AVs) is their safety and reliability. Autonomous vehicles typically operate in complex environments characterized by high-dimensionality, non-linearity, stochasticity, and non-stationarity. Moreover, the operational environment of an autonomous vehicle continuously evolves by responding to actions performed by the autonomous vehicle, and is therefore, responsive or closed loop in nature. The autonomous vehicle is controlled by a software stack trained to maneuver in such complex operational environments. The software stack must be tested rigorously using increasingly complex scenarios to improve safety and reliability of the autonomous vehicle. Such testing of the software stack may only be performed by equally complex testing algorithms.

In existing prior art, a collection of computational agents (hereinafter called 'agents') that simulate behavior of dynamic or static entities in a real-world environment, such as vehicles, pedestrians, weather, fog, illumination, road surface etc. is used to test an autonomous vehicle The agents may be based on mathematical modelling of the dynamic or static objects present in the real-world environment based on, for example, machine learning models or other algorithms. Each of the agents may be autonomous or semi-autonomous in nature. The agents collaboratively create difficult-to-maneuver scenarios and situations for the software stack in a simulated environment. Such an agents-based system may also be used to identify failure points of an autonomous vehicle. Naturally, such an agents-based system is difficult to design by hand due to various complexities involved, namely, high-dimensionality, nonlinearity, stochasticity and non-stationarity. Data-driven approaches are promising in such cases because such approaches have the potential to capture these complexities from data obtained from real world scenarios, along with data augmentation and data synthesis. However, a single source of data may not fully represent complexities presented by the real world. Therefore, it is prudent to combine data from multiple sources for training the agents. Further, a quality of training of the agents must be assessed by evaluating performance of such an agents-based system with respect to their ability to simulate safety critical scenarios for testing of autonomous vehicles.

In light of the above, there exists a need for an improved system and method for managing agents used for testing of autonomous vehicles.

**Summary**

The object of the present invention is achieved by a system and method for managing one or more adversarial agents used for testing of autonomous vehicles as disclosed herein.

The method includes, obtaining offline data for initializing one or more adversarial agents from one or more first sources, by a processing unit. The offline data comprises at least one of real data and statistical simulation data. In an embodiment, the real data corresponds to one or more of crash scenarios and near-crash scenarios encountered by one or more real autonomous vehicles during operation.

The method further includes, using a feedback-based learning algorithm to train the one or more adversarial agents based on the offline data and expert inputs received from a second source. The one or more adversarial agents are trainable computational models that model behavior of one or more entities that affect behavior of autonomous vehicles in a physical environment. In an embodiment, the feedback-based learning algorithm is one of reinforcement learning (RL), reinforcement learning using human feedback (RLHF) and imitation learning. In an embodiment, using the feedback-based learning algorithm to train the one or more adversarial agents based on the offline data and, expert inputs further includes, initializing the one or more adversarial agents based on the offline data. Further, a simulated environment for performing simulations, is configured based on a software stack of a reference autonomous vehicle and the one or more adversarial agents initialized. Further, based on the expert inputs received from the second source behavior of at least one of the initialized adversarial agents is controlled in real-time.

In a further embodiment, if the feedback-based learning algorithm is RLHF, the one or more adversarial agents are trained based on the offline data and expert inputs received from the second source by, dynamically updating at least one of the adversarial agents, in real-time, based on the one or more expert inputs received from an expert. The expert inputs act as feedback for updating a reward function associated with the at least one adversarial agent.

In an alternate embodiment, if the feedback-based learning algorithm is one of RL and imitation learning, the one or more adversarial agents are trained based on the offline data and expert inputs received from the second source by, firstly, generating a training dataset for the one or more adversarial agents from a data log associated with the simulation environment. Further, the generated training dataset is used for offline training of the one or more adversarial agents.

In an embodiment, the method further includes evaluating a performance of the one or more adversarial agents, upon training by, computing one or more performance metrics associated with the one or more adversarial agents based on simulated responses of the software stack to one or more actions of the one or more adversarial agents. In an embodiment, the one or more performance metrics is associated with at least one of a level of safety-criticality of scenarios resulting from actions of the one or more adversarial agents, a sensitivity of the generated scenarios to actions performed by each of the one or more adversarial agents, effectiveness of collaboration between the adversarial agents, and adaptability of the one or more adversarial agents in response to behavior of the software stack.

In an embodiment, the method further includes generating a human-interpretable recommendation for modifying the expert inputs using a predetermined logic. Further, the human-interpretable recommendation is outputted on an output device for enabling the expert to modify the expert inputs in real-time. In an embodiment, the predetermined logic generates the human-interpretable recommendations based on the computed one or more performance metrics. The modified expert inputs are used for retraining the one or more adversarial agents using the feedback-based learning algorithm, if the one or more performance metrics fail to meet a predefined standard.

The method further includes, deploying the one or more adversarial agents, upon training, onto a test execution platform for testing of a system-under-test. The system-under-test is associated with an autonomous vehicle-to-be-tested. In an embodiment, the test execution platform is associated with one of vehicle-in-loop testing, hardware-in-loop testing, human-in-loop testing, software-in-loop testing, and model-in-loop testing.

Disclosed herein is also an apparatus comprising one or more processing units and a memory unit communicatively coupled to the one or more processing units. The memory unit comprises adversarial agents module stored in the form of machine-readable instructions executable by the one or more processing units. TThe adversarial agents module is configured to perform method steps according to any of the method steps described above.

Disclosed herein is also a system for managing one or more adversarial agents used for testing of an autonomous vehicle. The system comprises at least one client and an apparatus as described above, communicatively coupled to the at least one client. The apparatus is configured for managing the one or more adversarial agents used for testing of autonomous vehicles based on inputs received from the at least one client, according to any of the method steps described above.

Disclosed herein is also a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes and features of this invention and the manner of achieving them, will become more apparent and understandable (clear) with the following description of embodiments of the invention in conjunction with the corresponding drawings. The illustrated embodiments are intended to illustrate, but not limit the invention.

**Brief description of figures**

The present invention is further described hereinafter with reference to illustrated embodiments shown in the accompanying drawings, in which:

FIG 1A    illustrates a block-diagram of a system for managing adversarial agents used for testing of autonomous vehicles, in accordance with an embodiment of the present invention;

FIG 1B    illustrates a block-diagram of an apparatus for managing adversarial agents used for testing of autonomous vehicles, in accordance with an embodiment of the present invention;

FIG 2     shows a flowchart of a method for managing one or more adversarial agents used for testing of autonomous vehicles, in accordance with an embodiment of the present invention;

FIG 3     shows a flowchart of a method of combining the offline data with real-time expert inputs, in accordance with an embodiment of the present invention.; and

FIG 4      shows a workflow for using a training dataset to synchronously train one or more adversarial agents and a software stack using reinforcement learning, in accordance with an exemplary embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

## Detailed description

Examples provided herein are intended for illustrative purposes only and should not be construed as limiting the scope of the invention. The examples are non-limiting and are provided solely to aid in understanding the embodiments described. It should be understood that the invention is not limited to the specific embodiments or examples provided herein.

In the field of autonomous vehicles, terms such as 'scene' and 'scenario' are commonly used to refer to the dynamic environment in which the autonomous vehicle operates. It must be understood that a 'scene' typically encompasses the surroundings, including the road, surrounding objects, and traffic, while 'scenario' refers to specific driving situations and conditions. The term 'scene' as used herein refers to a snapshot of an environment including static entities (scenery) and dynamic entities that describe an environment of the autonomous vehicle, and the relationships among those entities. The term 'scenario' as used herein refers to temporal development between several scenes leading to a specific outcome. As the terms 'scene' and 'scenario' are well-known in the field of autonomous systems. Given their widely recognized usage and understanding within the field, further elaboration on the definitions and concepts of 'scene' and 'scenario' is not provided in this disclosure.

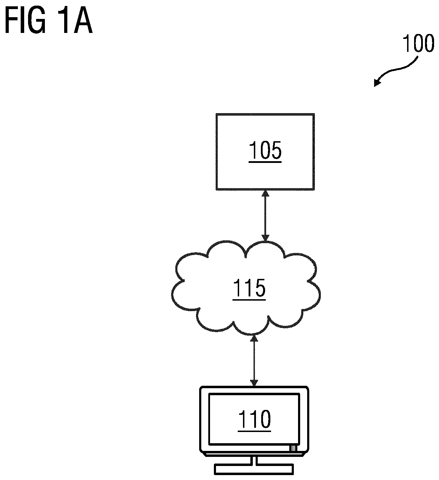

FIG 1A illustrates a block-diagram of a system 100 for managing adversarial agents used for testing of autonomous vehicles, in accordance with an embodiment of the present invention. The system 100 comprises an apparatus 105 communicatively coupled to at least one client 110 via a network 115. In an embodiment, the apparatus 105 is a cloud-based platform. The client 110 may be for example, a human-machine interface that enables testing personnel (user) to interact with the apparatus 105.

The term 'autonomous vehicles' as used herein may refer to autonomous vehicles of different levels of driving automation such as partial automation (level 2), conditional automation (level 3), high automation (level 4) and full automation (level 5). Some autonomous vehicles possess a nondeterministic behavior in the physical environment. The behavior of such autonomous vehicles may be governed by stimuli from a physical environment as perceived by sensors associated with the autonomous vehicle. Such stimuli are hereinafter collectively referred to as sensory inputs. For example, an autonomous vehicle may operate based on stimuli sensed by cameras, lidars and radars attached to a body of the autonomous vehicle. Such autonomous vehicles may also operate based on inputs received from a human operator or another system through an interface. For example, in case of an autonomous vehicle, a driver may choose to 'disengage' from autonomous mode to revert to a manual mode.

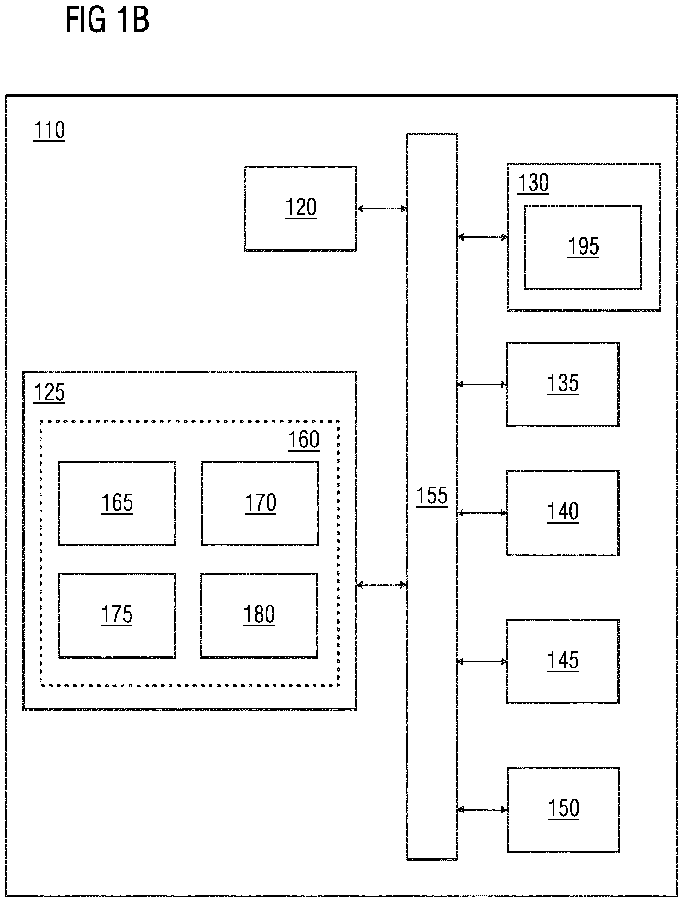

The apparatus 105 comprises a processing unit 120, a memory 125, a storage unit 130, a communication unit 135, a network interface 140, an input unit 145, an output unit 150, a standard interface or bus 155, as shown in FIG 1B. The apparatus 105 can be a (personal) computer, a workstation, a virtual machine running on host hardware, a microcontroller, or an integrated circuit. As an alternative, the apparatus 105 can be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit.

The processing unit 120 may also include embedded controllers, such as generic or programmable logic devices or arrays, application specific integrated circuits, single-chip computers, and the like. In general, the processing unit 120 may comprise hardware elements and software elements. The processing unit 120 can be configured for multithreading, i.e., the processing unit 120 may host different calculation processes at the same time, executing the either in parallel or switching between active and passive calculation processes.

The memory 125 may include one or more of a volatile memory and a non-volatile memory. The memory 125 may be coupled for communication with the processing unit 120. The processing unit 120 may execute instructions and/or code stored in the memory 125. A variety of computer-readable storage media may be stored in and accessed from the memory 125. The memory 125 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory 125 comprises an adversarial agents module 160 that may be stored in the memory 125 in the form of machine-readable instructions and executable by the processing unit 120. These machine-readable instructions when executed by the processing unit 120 causes the processing unit 120 to provide services related to managing adversarial agents used for testing of autonomous vehicles. The adversarial agents module 160 comprises a data management module 165, a training module 170, a deployment module 175 and a rendering module 180.

The data management module 165 is configured for obtaining offline data for initializing the one or more adversarial agents from one or more first sources. The offline data comprises at least one of real data and statistical simulation data. The training module 170 is configured for using a feedback-based learning algorithm to train the one or more adversarial agents based on the offline data and expert inputs received from a second source. The one or more adversarial agents are trainable computational models that model behavior of one or more entities that affect behavior of autonomous vehicles in a physical environment. The deployment module 175 is configured for deploying the trained adversarial agents onto a test execution platform (not shown) for testing a system-under-test. The system-under-test is associated with an of an autonomous vehicle-to-be-tested. The rendering module 180 is configured for providing human-interpretable recommendations for modifying the expert inputs.

The client 110 may enable the user to provide inputs related to managing one or more adversarial agents, via a user interface of the client 110, to the apparatus 105. For example, the client 110 may enable the user to send a request for deploying trained adversarial agents onto a test execution platform. In another example, the client 110 may enable the user to specify the one or more first sources for obtaining offline data and the second source for obtaining expert inputs to be used for training of the one or more adversarial agents. The client 110 may also enable the user to specify a specific software stack to be used for training the one or more adversarial agents. In another embodiment, the client 110 may be the test execution platform onto which the trained adversarial agents are to be deployed.

The storage unit 130 comprises a non-volatile memory which stores a database 195. In an embodiment, the database 195 may store offline data used for training of the one or more adversarial agents. In other words, the database 195 may act as at least one of the first sources. The input unit 145 may include input means such as keypad, touch-sensitive display, camera, etc. capable of receiving input signal. The bus 155 acts as interconnect between the processing unit 120, the memory 125, the storage unit 130, and the network interface 140. The output unit 150 may include output means such as displays, speakers, etc. that are capable of providing an output.

The communication unit 135 enables the apparatus 105 to communicate with the at least one client 110. The communication unit 135 may support different standard communication protocols such as Transport Control Protocol/Internet Protocol (TCP/IP), Profinet, Profibus, Bluetooth and Internet Protocol Version (IPv). The network interface 140 enables the apparatus 105 to communicate with the client 110 over the network 115.

The apparatus 105 in accordance with an embodiment of the present invention includes an operating system employing a graphical user interface. The operating system permits multiple display windows to be presented in the graphical user interface simultaneously with each display window providing an interface to a different application or to a different instance of the same application. A cursor in the graphical user interface may be manipulated by a testing personnel through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present invention as described.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

The present invention is not limited to a particular computer system platform, processing unit 120, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

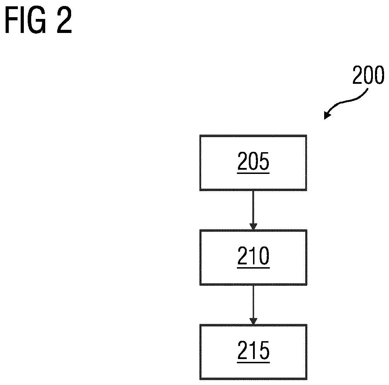

FIG 2 shows a flowchart of a method 200 of managing one or more adversarial agents used in testing of autonomous vehicles, in accordance with an embodiment of the present invention. The method comprises steps 205 to 215 implementable by the apparatus 105.

At step 205, offline data for initializing the one or more adversarial agents is obtained, by the processing unit 120, from one or more first sources. The offline data comprises at least one of real data and statistical simulation data. In an embodiment, the real data may correspond to one or more of crash scenarios and near crash scenarios encountered by one or more real autonomous vehicles during operation. The term ' real autonomous vehicles in operation' refer to autonomous vehicles already deployed for operation after testing. The real data corresponding to crash scenarios may hereinafter be referred to as 'crash data' and the real data corresponding to near-crash scenarios may be referred to as 'near-crash data' .

The crash data may include unprocessed data sourced from accident databases such as German In-Depth Accident Study (GIDAS), Unfalatlas etc. The crash data is indicative of factors that lead to hazardous scenarios for autonomous vehicles in physical environment. Non-limiting examples of such factors that lead to hazardous scenarios include, but are not limited to, illumination, weather conditions, traffic conditions, map geometry (e.g., presence of intersections, curves etc.), road user types (e.g., pedestrians, cyclists, motorcyclists etc.), collision configuration, severity of accident etc. In an example, the crash data may comprise datapoints from the accident database corresponding to events that are labelled as 'dangerous'. The near-crash data is indicative of environmental factors, map geometry, as well as trajectories, deceleration and maneuvers taken by road users in a near-crash scenario. Similarly, the real data may also include data computed based on unprocessed data present in the accident database. The computed data may be indicative of behavior of one or more entities, such as another vehicle (for example, oncoming vehicle) in the physical environment during an accident or in a near-miss scenario. In an example, the near-crash data may include video footages of near-crash scenarios, from dash-cams or CCTV recorders, that are indicative of trajectories or driving behaviors that lead to near-crash/near-miss scenarios which may be processed to compute factors such as severity of the near-crash scenario. The real data may also include test data generated from field tests conducted on software stacks from one or more real autonomous vehicles. For example, disengagement data representative of different disengagement metrics in a plurality of scenarios may be obtained from such field tests. The term 'software stack' refers to software that enables autonomous operation of the autonomous vehicle. In an embodiment, the software stack may be a perception model, planning model, control model, a decision-making model or the like, or a combination thereof, that are executable by an Electronic Control Unit (ECU) associated with the autonomous vehicle. In case of a fully autonomous vehicle, the software stack is an Autonomous Driving System (ADS). In case of a semi-autonomous vehicle, the software stack may correspond to an Advanced Driver Assistance System (ADAS).

The statistical simulation data may be generated by, for example, an optimization algorithm used for generating safety-critical scenarios for testing of autonomous vehicles. In another example, the statistical simulation data may be obtained from an accident database comprising traffic data generated by traffic simulators. For example, the traffic simulator may be used to identify high-risk areas or zones through a plurality of random macroscopic simulations associated with identifying traffic hotspots or junction configurations. Advantageously, statistical simulation data helps in determining a plurality of crash or near-crash scenarios that are unknown beforehand for which real data is unavailable. The statistical simulated data also helps in capturing uncommon relationships between parameters that influence a scenario or uncommon trends associated with such parameters.

At step 210, one or more adversarial agents are trained using the feedback-based learning algorithm based on the offline data and expert inputs received from a second source. The one or more adversarial agents are trainable computational models that model behavior of one or more entities that affect behavior of an autonomous vehicle in a physical (natural) environment. The term 'computational models' as used herein may refer to any model that is adaptive in nature & capable of controlling or affecting behavior of different actors in a simulation environment. Non-limiting examples may include machine learning models and artificial intelligence models. The adversarial agents collectively simulate behavior of one or more static or dynamic entities in the real world that affect behavior of an autonomous vehicle. Non-limiting examples of such entities include weather, illumination, road geometry, road surface, traffic signals, traffic signboards, pedestrians, other vehicles on the road etc.

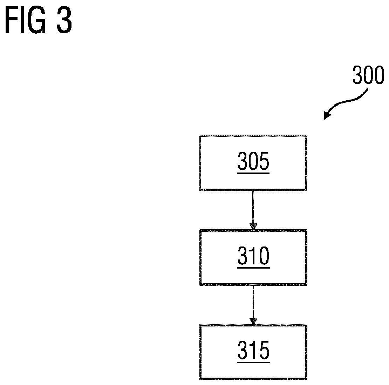

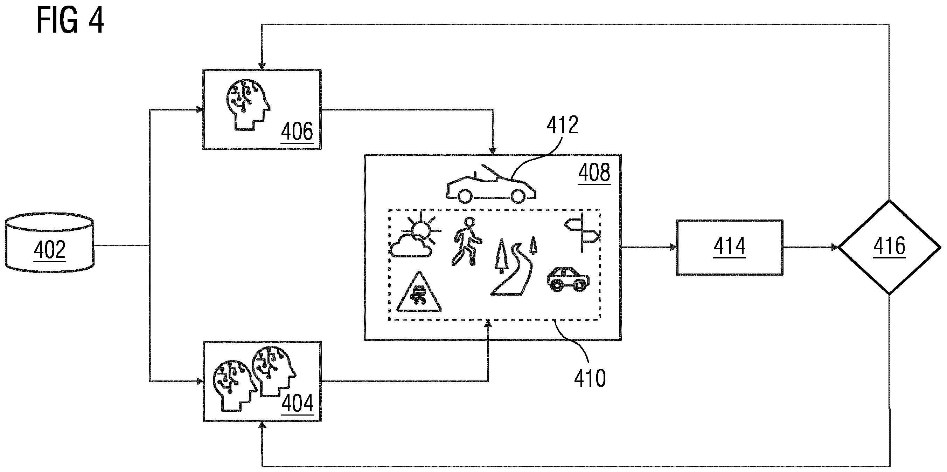

In an example, the second source is a gaming console communicatively coupled to the apparatus. FIGS3 & 4 illustrate an exemplary method for training the one or more adversarial agents using a training dataset generated by combining the offline data with expert inputs received from a gaming console, as detailed later. It must be understood that the second source may include also include other electronic devices such as workstations, laptops, smart phones etc., that enable an expert (expert user) to input the expert inputs via an interactive interface.

At step 215, the one or more adversarial agents, upon training, are deployed onto a test execution platform configured for testing of a system-under-test, wherein the system-under-test is associated with an autonomous vehicle-to-be-tested. For example, the system-under-test may be a software stack or a hardware component associated with the autonomous vehicle-to-be-tested. In an example, the test execution platform may be a testbed used for Euro NCAP testing for assessing safety of an autonomous vehicle. In case of a plurality of trained adversarial agents, the trained adversarial agents collaboratively act as a multi-agent collaboration system. The term 'multi-agent collaboration system' as used herein, refers to a collaborative network of adversarial agents that mimics a physical environment in which the autonomous vehicle-to-be-tested is intended for operation. In particular, the one or more adversarial agents generate, within a simulated environment, stimuli that mimic effect of entities such as, but not limited to, pedestrians, traffic signals, road bumps etc. on the autonomous vehicle-to-be-tested in the physical environment.

The one or more adversarial agents are deployed onto a test execution platform for enabling testing of a dynamic behavior of the autonomous vehicle-to-be-tested in response to one or more safety-critical scenarios simulated by the one or more adversarial agents. In an embodiment, the test execution platform is associated with one of vehicle-in-loop testing (VILT), hardware-in-loop testing (HWILT), human-in-loop testing (HILT), software-in-loop testing (SWILT), and model-in-loop testing (MILT). Testing methods such as VILT, HWILT, HILT, SWILT, and MILT are well-known in the field of testing of autonomous vehicles and are commonly used by persons skilled in the art. For the sake of brevity and clarity, detailed explanations of these testing methods are not provided herein. It is understood that those skilled in the art would readily comprehend and be familiar with their meanings and usage in the relevant technical context.

In an implementation, deploying the one or more adversarial agents may comprise installing a computer program product generated based on the one or more adversarial agents on a hardware associated with the test execution platform. For example, the computer program product may be a software package comprising machine-readable instructions stored therein, that may be loaded onto a memory of the test execution platform. The computer program product may be provided as a service by a cloud computing platform to one or more 'tenants' or 'sub-tenants'. Each of the tenants or sub-tenants may be associated with one or more test execution platforms. The tenant is a client, communicatively coupled to the cloud computing platform, that enables an operator to request for deploying the trained one or more adversarial agents on the test execution platform. Further, cloud computing platform may transmit the computer program product to the tenant. The tenant may further initiate deployment of the trained adversarial agents on the test execution platform, for configuring the test execution platform based on the trained adversarial agents. The test execution platform may be, for example, a workstation or a simulation platform configured to perform one of VILT, HWILT, HILT, SWILT, and MILT.

For example, during MILT or SWILT, the trained adversarial agents simulate safety-critical scenarios for affecting behavior of the autonomous vehicle-to-be-tested, on the test execution platform. Further, a system-under-test corresponding to the autonomous vehicle-to-be-tested reacts to the stimuli by performing an action. Herein, the system-under-test may indicate software components, hardware components, electrical components, etc., associated with the autonomous vehicle-to-be-tested, depending on the type of testing. Herein, an action of the system-under-test in response to a safety critical scenario generated by the trained adversarial agents, is indicative of the dynamic behavior of the autonomous vehicle-to-be-tested in response to the simulated safety-critical scenarios. The action of the system-under-test may be quantified by one or more response parameters such as stopping distance of the autonomous vehicle, time to collision, post encroachment time, response time etc. The action may be identified based on one or more simulation results, indicative of the one or more response parameters, generated upon the simulation.

In a further embodiment, the test execution platform may include a supervisory module configured to monitor the one or more adversarial agents based on a set of rules. For example, the set of rules may correspond to checking physical and/or logical fidelity in the stimuli generated by the adversarial agents. For example, the test execution platform may perform checks for a set of rules, such as values of the physical parameters corresponding to the generated stimuli being in a valid range (e.g., acceleration less than 9.8 m/s^2, speed generated to be less than 120 kmph along with internal consistency between speed and acceleration such as derivative of speed and acceleration being within a small interval of each other). For example, in case value of a parameter is out of the predefined logical range, the supervisory module adjusts the value of the parameter to the maximum/minimum allowed limit of predefined logical range.

In another implementation, the supervisory module may be deployed onto the test execution platform along with the one or more smart adversarial agents. For example, the supervisory module may be part of the computer program product installed on the test execution platform.

In an embodiment, the test execution platform is further configured to evaluate performance of the one or more adversarial agents by computing the one or more performance metrics based on responses of the system-under-test to actions of the one or more adversarial agents.

Further, the test execution platform renders an output indicative of the dynamic behavior of the system-under-test on a user interface. In an embodiment, a graphical rendering of the simulation along with the one or more performance metrics of the adversarial agents computed based on the simulated responses of the system-under-test may also be provided on the user interface for enabling the user to visualize performance of the one or more adversarial agents.

It may be understood by a person skilled in the art that it is also possible to modify the invention to train the adversarial agents based on real or statistical simulation data generated for a software stack associated with an autonomous vehicle specified by the user. For example, the user may provide specify the software stack through a file input (source). Further, a simulated environment configured based on adversarial agents thus trained, may be used for performing a variety of tests (HILT, SWILT, HWILT etc.) on the same autonomous vehicle specified by the user.

FIG 3 shows a flowchart of a method 300 of combining the offline data with real-time expert inputs, in accordance with an embodiment of the present invention. The method comprises steps 305 to 315 implementable on apparatus 105.

At step 305, the one or more adversarial agents are initialized based on the offline data. In an embodiment, the one or more adversarial agents are computational models based on neural networks. In an embodiment, initializing the one or more adversarial agents includes, firstly preprocessing the offline data to determine ranges of parameters that lead to safety-critical scenarios. For example, maximum and minimum values of parameters present in the offline data may be extracted to determine the range. Further, weights of the neural networks associated with the one or more adversarial agents are updated based on ranges of parameters present in the offline data. For example, layers or nodes of the neural network that are based on sigmoid, or tanh activation function may be initialized based on the ranges of parameter using Xavier initialization or normalized Xavier initialization. In case of layers or nodes of the neural network that use RelU activation function, 'He' weight initialization method may be used.

At step 310, a simulated environment is configured based on the one or more adversarial agents initialized and a software stack of a reference autonomous vehicle. In an example, the simulated environment may be a driving simulator configured to simulate controls and operations of a car or truck. In another example, the simulated environment may be a biking simulator configured to simulate controls and operations of a motorcycle or bicycle. In an implementation, the simulated environment may provide an Augmented Reality (AR) or Virtual Reality (VR) based environment that mimics the physical environment in which an autonomous vehicle may operate.

At step 315, behavior of at least one of the initialized adversarial agents is controlled in real-time, based on the expert inputs received from a second source. The expert inputs cause the controlled adversarial agent, to perform actions that create safety-critical scenarios for the software stack of the reference autonomous vehicle 412. The controlled adversarial agent maybe any one among a plurality of adversarial agents whose behavior is adaptable in real-time based on the expert inputs.

In an embodiment, the expert inputs may be received via a user interface associated with simulated environment configured to provide a Point-of-View (PoV) of the controlled adversarial agent. For example, if the controlled adversarial agent corresponds to a vehicle, the PoV may correspond to a driver of the vehicle. In a preferred embodiment, the second source is a gaming console operable by the expert. In the present example, the gaming console may include one or more of a steering wheel, brake pedal, accelerator pedal etc. The gaming console enables the user to provide the expert inputs for controlling maneuvers, trajectories, acceleration, deceleration, braking etc. of the vehicle represented by the controlled adversarial agent. For example, if the user desires to increase a speed associated with the vehicle, they may use the accelerator pedal to provide an expert input that causes the controlled adversarial agent to perform an action indicative of increased acceleration of the vehicle.

In another example, the expert may control weather conditions in the simulated environment via expert inputs indicative of, for example, rainfall or illumination levels, by controlling a corresponding adversarial agent. For example, the expert may enter values of rainfall to be simulated, in a predefined text input field on the user interface. In addition, the expert inputs may also include data corresponding to scenarios that leads to a failure mode of the software stack in response to actions of the controlled adversarial agent, environmental conditions that led to the failure mode etc.

Based on action performed by at least the controlled adversarial agent, safety-critical scenarios are generated for the software stack. The software stack may further react to actions of the controlled adversarial agent, by generating or simulating responses that mitigate a given safety-critical scenario.

In a further embodiment, the training of the one or more adversarial agents is succeeded by evaluation of performance of the one or more trained adversarial agents by computing one or more performance metrics associated with the one or more adversarial agents based on simulated responses of the software stack to one or more actions of the one or more adversarial agents.

In an embodiment, at least one of the performance metrics may be indicative of a level of safety-criticality of scenarios resulting from actions of the one or more adversarial agents. For example, the performance metric is a net safety criticality score associated with an overall performance of the one or more adversarial agents within a safety-critical scenario. In particular, the net safety criticality score is computed based on a simulated response of the software stack to the safety-critical scenario. The net safety criticality score is computed based on factors such as leading and lagging safety measurements such as collision severity, near miss, time to collision, measures of aggressive/erratic behavior of the software stack etc. Such factors are determined from the simulated responses of the software stack within a scene in the safety-critical scenario, based on predetermined mathematical formulae. In an example, if the safety criticality score is lower than a predefined value, the recommendation may be to provide a certain type of expert inputs to the controlled adversarial agent. For example, the user may be asked to perform more rash actions through the controlled adversarial agent such that the resulting scenarios have higher safety criticality score. Otherwise, if the safety criticality score is greater than the predefined value, the recommendation may include performing more conservative actions, to lower the safety criticality score.

In another embodiment, at least one of the performance metrics may be indicative of a sensitivity of the generated scenarios to actions performed by each of the one or more adversarial agents. In yet another embodiment, at least one of the performance metrics may be indicative of an effectiveness of collaboration between the adversarial agents. For example, the performance metrics may correspond to performance of individual adversarial agents and collaborative performance of the adversarial agents in safety-critical scenarios. The performance of the individual adversarial agents is computed using sensitivity analysis on the scenarios and responses of the software stack to the scenarios during the training. In a preferred embodiment, performance of an individual adversarial agent is defined as a function of the ratio of variance of net safety criticality score divided by the variance of actions of the adversarial agent. The collaborative performance of two or more of the adversarial agents is defined as ratio of net safety criticality score due to the adversarial agents divided by the sum of safety criticality introduced by individual adversarial agents.

In yet another embodiment, at least one of the performance metrics is indicative of an adaptability of the one or more adversarial agents in response to behavior of the software stack. For example, the performance metric may correspond to smartness of an adversarial agent. The smartness is quantified using an adaptability measure. The adaptability measure quantifies adaptability of the one or more adversarial agents, based on time taken by the one or more adversarial agents to create a safety-critical scenario for the software stack. The adaptability measure may indicate, for example, quickness of the one or more adversarial agents in responding to counter-maneuvers generated by the software stack, or efficiency of the one or more adversarial agents create safety criticality scenarios in a short time. To compute the adaptability measure, sequential variation between two consecutive safety-critical scenarios is computed, over a predefined period of time. The sequential variation may be computed as difference in safety criticality of a scene at time t and t+1, where t may be a timestamp measured in seconds.

$$\text{Sequential variation} = \text{safety criticality of scene at time } (t+1) - \text{safety criticality of the scene at time } (t) \tag{1}$$

The sequential variation may take positive or negative values depending on the safety criticality of the consecutive scenes considered. The adaptability measure may be further computed as number of successive counts of positive sequential variation divided by number of successive counts of negative sequential variation.

The performance metrics may be further compared against predefined criteria for determining whether the performance of the adversarial agents meets a predefined standard. If the performance is not meeting the predefined standard, the one or more adversarial agents may be retrained using the feedback-based learning algorithm. The retraining may be performed by using modified expert inputs.

In an embodiment, human-interpretable recommendations for modifying the expert inputs are generated using a predetermined logic. In an example, the recommendations may be generated using a classification algorithm (e.g., decision tree algorithm) based on value of one or more of the performance metrics. For example, a decision tree may take values of the one or more performance metrics & generate output labels indicative of one or more recommendations to the user. For example, the output label may be "decelerate". Further, the output may be processed using a natural language processing algorithm to generate voice or text comprehendible by humans. In another example, the recommendations may be generated by a generative Artificial Intelligence (AI) model, e.g., a conversational AI, trained to generate text based on different values of the performance metrics. In an alternate example, the recommendations may be generated based on a state of the adversarial agents, instead of the performance metrics. The human-interpretable recommendations are further outputted on an output device for enabling the expert to modify the expert inputs in real-time. For example, the recommendations may be provided as text on a display device (i.e., the output device) associated with the simulated environment. In response, the user may choose to accept the recommendation by modifying the expert inputs in line with the recommendation. Otherwise, the user may ignore the recommendations. In an embodiment, the recommendations are generated when the one or more performance metrics fail to meet a predefined standard. The modified expert inputs are used for retraining the one or more adversarial agents using the feedback-based learning algorithm, if the one or more performance metrics fail to meet the predefined standard. Further steps 305 to 315 may be repeated until a predefined criterion is met. For example, the predefined criterion may correspond to the performance metric consistently achieving a specific minimum value over a specific number of iterations of steps 305 to 315.

In an embodiment, a training dataset for the one or more adversarial agents is further generated from a data log generated associated with the simulated environment. Consequently, the training dataset thus generated is based on a combination of the offline data used for initializing the one or more adversarial agents and the expert inputs. The training dataset is further used for offline training of the one or more adversarial agents using a suitable training algorithm. In an embodiment, the training algorithm is one of reinforcement learning and imitation learning. To demonstrate using the training dataset for offline training, the training of the one or more adversarial agents using reinforcement learning is explained in detail with reference to FIG 4. It must be understood by a person skilled in the art that similar principles may be employed for utilizing the training dataset for training the one or more adversarial agents using imitation learning.

In another embodiment, the controlled adversarial agent is trained in real-time based on the expert inputs from the user, using Reinforcement Learning using Human Feedback (RLHF). The training using RLHF includes dynamically updating at least one of the adversarial agents, in real-time, based on the one or more expert inputs received from the expert. Here, the expert inputs act as feedback for updating a reward function (or policy) associated with the at least one adversarial agent. More specifically, expert inputs from the user act as human feedback for rewarding or penalizing actions of the controlled adversarial agent by updating reward function(s) (or policy) associated with the controlled adversarial agent.

FIG 4 shows a workflow 400 for using a training dataset 402 to synchronously train one or more adversarial agents 404 and a software stack 406, using reinforcement learning, in accordance with an exemplary embodiment of the present invention.

Each of the one or more adversarial agents 404 are configured to mimic one or more natural entities 410 in a simulation environment 408. The simulation environment 408 simulates a physical environment in which a reference autonomous vehicle 412 is intended for operation in the presence of the entities 410. The entities 410 may be static or dynamic in nature. The adversarial agents 404 may represent one of at least one of weather, illumination, road geometry, road surface, traffic signals, traffic signboards, pedestrians, and other vehicles on the road as shown in FIG 4.

The software stack 406 is associated with the reference autonomous vehicle 412. The adversarial agents 404 are adversarial machine learning models that are configured to generate stimuli for affecting a behavior of the software stack 406 within the simulation environment 408, thereby mimicking effect of the entities 410 on the reference autonomous vehicle 412 in the physical environment. The stimuli are intended to challenge a resilience of the software stack 406 against "adversarial behavior". In other words, the stimuli challenge decision-making capabilities of the reference autonomous vehicle 412, within a simulation environment 408, to expose potential failure modes of the reference autonomous vehicle 412 during operation in a physical environment. The term 'failure mode' as used herein refers to potential errors in performance of the software stack 406, that may lead to an undesirable scenario. The undesirable scenario may be, for example, a collision with an oncoming vehicle or pedestrian, swerving off a curve, etc.

The training dataset 402 comprises data points indicative of sequences of states, actions and rewards corresponding to a plurality of safety critical scenarios associated with autonomous vehicles. In a preferred embodiment, the training dataset 402 is in a state-action-reward format. For example, a data point corresponding to a given safety critical scenario, having state 'X', action 'Y' and reward 'Z', may be represented as 'X;Y;Z'. The training dataset 402 in state-action-reward format may be generated from data logs of the simulated environment as explained earlier with reference to FIG 3. The data points may be indicative of, for example, environmental conditions of the reference autonomous vehicle 412, maneuvers, or actions of the reference autonomous vehicle 412 in response to the environmental condition etc., that led to the scenario. For example, the data points indicative of the environmental conditions of the reference autonomous vehicle 412 may include values indicative of ambient weather conditions, ambient temperature conditions, road geometry, friction coefficient associated with the road surface, etc., which resulted in the scenario. Further, the data points indicative of actions pf the reference autonomous vehicle 412 may include braking, speed, acceleration, type of maneuver (e.g., parking, overtaking, reversing) etc. It should be understood that the types of data in the training dataset 402 may vary based on various factors such, but not limited to, a type of testing and a level of autonomy of the autonomous vehicle-to-be-tested.

In order to enable the training, the training module 170 configures a closed loop adversarial learning setting in a simulation environment 408. The closed loop adversarial learning setting enables synchronized training of the one or more adversarial agents 404 and the software stack 406 using a feedback-based learning algorithm, based on a common training dataset 402. Further, a plurality of safety-critical scenarios for the reference autonomous vehicle 412 are simulated, within the simulation environment 408 to generate one or more simulation results.

Herein, the feedback-based learning algorithm enables synchronous training by providing a common feedback signal, to the one or more adversarial agents 404 and the software stack 406, at the same instance of time. Such synchronous training involves simultaneous updating of model parameters and/or policies of the one or more adversarial agents 404 and the software stack 406. The term 'policy' as used herein refers to strategies adopted by an adversarial agent for achieving a certain goal. Here, the goal is to maximize the reward. Advantageously, the synchronous training helps the one or more adversarial agents 404 to learn various actions that the software stack 406 may perform in response to various stimuli, and to generate stimuli that challenge the software stack 406. In a preferred embodiment, the feedback-based learning algorithm uses reinforcement learning to train an agent (the software stack 406 or the adversarial agents 404). Further, the feedback-based learning algorithm also aims to enhance performance of the software stack 406 and the one or more adversarial agents 404, simultaneously and synchronously, by leveraging a common feedback signal.

In reinforcement learning, an output data typically includes action selections or policies that maximize expected rewards in a given state. In other words, reinforcement learning algorithms are based on estimating value functions. The value functions are functions of states or of state-action pairs that estimate how good it is for an agent (the software stack 406 or the adversarial agents 404) to be in each state, or how good it is to perform a specific action in a given state. The notion of "how good" here is defined in terms of future rewards that may be expected. The rewards depend on actions taken by the agent. Accordingly, value functions are defined with respect to policies.

In the present invention, the software stack 406 is trained based on the training dataset 402 and stimuli generated by the one or more adversarial agents 404. The adversarial agents 404 are also trained in parallel based on the training dataset 402 and actions of the software stack 406. During training, respective policies of the adversarial agents 404 are updated. Similarly, respective policy of the software stack 406 is also updated based on the stimuli generated by the one or more adversarial agents 404. For example, adversarial reinforcement learning algorithms, such as Proximal Policy Optimization (PPO) or Trust Region Policy Optimization (TRPO), iteratively update policy of the software stack 406 by incorporating reinforcement feedbacks (feedback signals) gained from interactions with adversarial agents 404 in the simulation environment 408.

A policy $\pi$ is a mapping from each state $s \in S$ and action $a \in A(s)$, to the probability $\pi(s, a)$ of performing an action $a$ when in state $s$. In a typical reinforcement learning setting, the value of a state s under a policy $\pi$, denoted by $V^{\pi}(s)$, is the expected reward when starting in $s$ and following $\pi$ thereafter.

$$V^{\pi}(s) = E_{\pi}\{R_t | s_t = s\} = E_{\pi}\left\{\sum_{k=0}^{\infty} \gamma^k r_{t+k+1} \,\middle|\, s_t = s\right\},$$

$$(2)$$

where $E_{\pi}\{\}$ denotes the expected value given that the agent follows policy $\pi$, and $t$ is any time step. The function $V^{\pi}$ represents the state-value function for policy $\pi$.

In the present embodiment, $\pi$ represents a likelihood of one or more adversarial agents 404 or the software stack 406 taking an action $a$ in state $S$. In particular, the state $s$ of represents a set of datapoints that define a scene in a simulation. The data points may correspond to, for example, positions, velocities, orientations of traffic participants (other vehicles, pedestrians etc.), environmental and local factors such as road geometry, illumination, weather, etc. For example, in case of an adversarial agent that represents another vehicle, actions may include performing a specific maneuvers such as turning right at 40kmph with a turning radius of 2 meters, coming close to the reference autonomous vehicle 412 to ensure a time headway of 1.5 seconds, etc. In case of other adversarial agents, actions may include illumination control for weather, coefficient of friction control for weather, etc.

Performing action $a$ in state $s$ based on the policy $\pi$ results in a new state s* within the simulation environment 408. Further, a reward for the one or more adversarial agents for taking an action $a$ in state $s$ is determined based on safety metrics associated with the new state s*. The safety metrics are computed by analyzing the one or more rmas obtained from simulation of the safety critical scenarios, as shown by step 414. The simulation results may indicate, for example, collision, near collision, time-to-collision, responsibility sensitive safety and post encroachment time.

The safety metrics may include, for example, an aggregate score of all low time-to-collision interactions (e.g., < 2 seconds) of the reference autonomous vehicle 412 with dynamic entities such as vehicles, pedestrians etc., and static entities or traffic furniture such as traffic poles, road dividers, etc.

In an embodiment, the reward may be in the form of a net safety criticality score computed using a predefined function, based on the one or more safety metrics. The net safety criticality score is at least one of a first category and a second category. In an example, the net safety criticality score falls under the first category if value of the net safety criticality score is greater than a threshold value. Otherwise, the net safety criticality score falls under the second category. In another example, the net safety criticality score may be one of two values, say, 'HIGH' and 'LOW'.

Depending on the net safety criticality score, a reinforcement feedback is generated. The reinforcement feedback is further provided to both the software stack 406 and the one or more adversarial agents 404 for updating respective policies of each of the software stack 406 and the one or more adversarial agents 404. The same reinforcement feedback is applied to both the software stack 406 and the one or more adversarial agents 404. However, the reinforcement feedback generated is configured to have opposite effects on the software stack 406 and the one or more adversarial agents 404. More particularly, the same reinforcement feedback acts as a positive learning feedback for the software stack 406, and as a negative learning feedback for the one or more adversarial agents 404, and vice versa.

If the net safety criticality score is of the first category, say 'HIGH', then a positive learning feedback is provided to the one or more adversarial agents 404 and a negative learning feedback is provided to the software stack 406, as shown by step 416. This is because, if the net safety criticality score is high or greater than a predefined threshold, the software stack 406 is to be trained to counteract the stimuli from the one or more adversarial agents 404 in a more efficient manner by doing less of the actions that led to the high net safety criticality score. In other words, the negative learning feedback penalizes the software stack 406 for the high net safety criticality score. On the other hand, the positive learning feedback rewards the adversarial agents 404 to generate more of similar stimuli that led to the high net safety criticality score.

Alternatively, if the net safety criticality score is 'LOW' or below the threshold value, then a positive learning feedback is provided to the software stack 406 to enable the software stack 406, at step 416, to perform more of the actions that led to the low net safety criticality score. On the other hand, the negative learning feedback penalizes the one or more adversarial agents 404. This causes the one or more adversarial agents 404 to update respective policies to generate better stimuli that leads to a higher net safety criticality score.

In the present embodiment, the trained adversarial agents 404 attempt to cause the software stack 406 to go into states (situations) that have high state value function. The state value function may implicitly represent a safety criticality of the situation and average safety criticality of subsequent situations that would arise after following policy $\pi$.

Similarly, the value of taking action *a* in state *s* under a policy $\pi$, denoted $Q^\pi(s,a)$, as the expected reward starting from *s,* taking the action *a*, and thereafter following policy $\pi$ is given by:

$$Q^\pi(s,a) = E_\pi\{R_t|s_t = s, a_t = a\} = E_\pi\left\{\sum_{k=0}^{\infty} \gamma^k r_{t+k+1} \,\middle|\, s_t = s, a_t = a\right\}. \tag{3}$$

$Q^\pi$ is the action-value function for policy $\pi$.

In the present disclosure, the adversarial agents 404, while following policy $\pi$ may choose an action *a* in a given state that has maximum Q-function value so that the expected reward in terms of net safety criticality score of the states visited by the software stack 406 may be maximized over the scenario simulation.

The value functions $V^\pi$ and $Q^\pi$ may be estimated from experience. For example, if an agent follows policy $\pi$ and maintains an average, for each state encountered, of the actual rewards that have followed that state, then the average converges to the state's value, $V^\pi(s)$, as the number of times that state is encountered approaches infinity. If separate averages are kept for each action taken in a state, then these averages similarly converge to the action values, $Q^\pi(s,a)$, It must be understood that value functions $V^\pi$ and $Q^\pi$ may be solved using standard approaches known in the art.

Advantageously, the software stack 406 is trained against the adversarial agents 404, such that the adversarial agents 404 aim to maximize their own rewards by exploiting weaknesses of the software stack 406. This helps in making the software stack 406 more robust against adverse scenarios. The synchronous training of the adversarial agents 404 and the software stack 406, is repeated for updated policies of the software stack 406 and/or the adversarial agents 404 until a predefined criteria is met. In an implementation, the predefined criteria may be until a failure mode is reached. Further, the use of performance metrics to quantify a quality of the training helps the testing personnel in validating the trained adversarial agents 404 & to taking decisions on requirement of further training of the adversarial agents 404 to meet a predefined standard. For example, the adversarial agents 404 may be trained until a specific safety standard is met.

The present invention is not limited to a particular computer system platform, processing unit 120, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

List of reference numerals

100 system
105 apparatus
110 at least one client
115 network
120 processing unit
125 memory
130 storage unit
135 communication unit
140 network interface
145 input unit
150 output unit
155 standard interface or bus
160 adversarial agents module
165 data management module
170 training module
175 deployment module

180 rendering module
195 database
402 training dataset
404 one or more smart adversarial agents
406 software stack
410 entities
412 reference autonomous vehicle

**Claims**

1. A computer-implemented method for managing one or more adversarial agents used for testing of an autonomous vehicle, the method comprising:

   obtaining, by a processing unit (120), offline data for initializing one or more adversarial agents (404) from one or more first sources, wherein the offline data comprises at least one of real data and statistical simulation data;
   using a feedback-based learning algorithm to train the one or more adversarial agents (404) based on the offline data and expert inputs received from a second source, wherein the one or more adversarial agents (404) are trainable computational models that model behavior of one or more entities (410) that affect behavior of autonomous vehicles in a physical environment; and
   deploying the one or more adversarial agents (404), upon training, onto a test execution platform for testing of a system-under-test, wherein the system-under-test is associated with an autonomous vehicle-to-be-tested.

2. The method according to claim 1, wherein the real data corresponds to one or more of crash scenarios and near-crash scenarios encountered by one or more real autonomous vehicles during operation.

3. The method according to claim 1, wherein the feedback-based learning algorithm is one of Reinforcement Learning (RL), Reinforcement Learning using Human Feedback (RLHF) and imitation learning.

4. The method according to claim 1, wherein using the feedback-based learning algorithm to train the one or more adversarial agents (404) based on the offline data and expert inputs further comprises:

   initializing the one or more adversarial agents (404) based on the offline data;
   configuring a simulated environment for performing simulations based on a software stack (406) of a reference autonomous vehicle (412) and the one or more adversarial agents (404) initialized; and
   controlling behavior of at least one of the initialized adversarial agents (404) in real-time, based on the expert inputs received from the second source.

5. The method according to claims 3 and 4, wherein if the feedback-based learning algorithm is RLHF, the one or more adversarial agents (404) are trained based on the offline data and expert inputs received from the second source by: dynamically updating at least one of the adversarial agents (404), in real-time, based on the one or more expert inputs received from an expert, wherein the expert inputs act as feedback for updating a reward function associated with the at least one adversarial agent.

6. The method according to claims 3 and 4, wherein if the feedback-based learning algorithm is one of RL and imitation learning, the one or more adversarial agents (404) are trained based on the offline data and expert inputs received from the second source by:

   generating a training dataset (402) for the one or more adversarial agents (404) from a data log associated with the simulation environment; and
   using the generated training dataset for offline training of the one or more adversarial agents (404).

7. The method according to claim 5 or 6, further comprises evaluating a performance of the one or more adversarial agents (404), upon training, by:
computing one or more performance metrics associated with the one or more adversarial agents (404) based on simulated responses of the software stack (406) to one or more actions of the one or more adversarial agents (404).

8. The method according to claim 7, wherein the one or more performance metrics is associated with at least one of:

a level of safety-criticality of scenarios resulting from actions of the one or more adversarial agents (404);

a sensitivity of the generated scenarios to actions performed by each of the one or more adversarial agents (404);

effectiveness of collaboration between the adversarial agents (404); and

adaptability of the one or more adversarial agents (404) in response to behavior of the software stack (406) .

9. The method according to claim 1, further comprising:

generating a human-interpretable recommendation for modifying the expert inputs using a predetermined logic; and

outputting the human-interpretable recommendation on an output device for enabling the expert to modify the expert inputs in real-time.

10. The method according to claims 8 and 9, wherein the predetermined logic generates the human-interpretable recommendations based on the computed one or more performance metrics.

11. The method according to claims 9 and 10, wherein the modified expert inputs are used for retraining the one or more adversarial agents (404) using the feedback-based learning algorithm, if the one or more performance metrics fail to meet a predefined standard.

12. The method according to claim 1, wherein the test execution platform is associated with one of vehicle-in-loop testing, hardware-in-loop testing, human-in-loop testing, software-in-loop testing, and model-in-loop testing.

13. An apparatus (105) for managing one or more adversarial agents (404) used for testing of an autonomous vehicle, the apparatus (105) comprising:

one or more processing units (120); and

a memory unit (125) communicatively coupled to the one or more processing units (120), wherein the memory unit (125) comprises a testing module (160) stored in the form of machine-readable instructions executable by the one or more processing units (120), wherein the testing module (160) is configured to perform method steps according to any of the claims 1 to 12.

14. A system (100) for managing one or more adversarial agents (404) used for testing of an autonomous vehicle, the system (100) comprising:

at least one client(110); and

an apparatus (105) according to claim 13, communicatively coupled to the at least one client (110), wherein the apparatus (105) is configured for managing the one or more adversarial agents (404) used for testing of autonomous vehicles based on inputs received from the at least one client (110), according to any of the method claims 1 to 12.

15. A computer-program product having machine-readable instructions stored therein, which when executed by one or more processing units (120), cause the processing units (120) to perform a method according to any of the claims 1 to 12.

## FIG 1A

100

105

115

110

# FIG 1B

FIG 2

200

```
┌─────────────┐
│     205     │
└─────────────┘
       │
       ▼
┌─────────────┐
│     210     │
└─────────────┘
       │
       ▼
┌─────────────┐
│     215     │
└─────────────┘
```

FIG 3

300

```
┌─────────────┐
│     305     │
└─────────────┘
       │
       ▼
┌─────────────┐
│     310     │
└─────────────┘
       │
       ▼
┌─────────────┐
│     315     │
└─────────────┘
```

FIG 4

Europäisches
Patentamt

European
Patent Office

Office européen
des brevets

# EUROPEAN SEARCH REPORT

Application Number

**EP 23 19 4299**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AIZAZ SHARIF ET AL: "Adversarial Deep Reinforcement Learning for Improving the Robustness of Multi-agent Autonomous Driving Policies", ARXIV.ORG, CORNELL UNIVERSITY LIBRARY, 201 OLIN LIBRARY CORNELL UNIVERSITY ITHACA, NY 14853, 21 February 2023 (2023-02-21), XP091442131, DOI: 10.1109/APSEC57359.2022.00018 * pages 1-9 * | 1-15 | INV. G05D1/20 G06N3/08 |
| A | US 2021/294944 A1 (NASSAR AHMED [US] ET AL) 23 September 2021 (2021-09-23) * paragraphs [0002] - [0120] * | 1-15 | |
| A | US 2022/405643 A1 (HERNANDEZ-LEAL PABLO FRANCISCO [CA] ET AL) 22 December 2022 (2022-12-22) * paragraph [0002] - paragraph [0118] * | 1-15 | |

| TECHNICAL FIELDS SEARCHED (IPC) |
|---|
| G06N G05D |

The present search report has been drawn up for all claims

| Place of search | Date of completion of the search | Examiner |
|---|---|---|
| The Hague | 16 February 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4299

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2024

| Patent document cited in search report | Publication date | Patent family member(s) | Publication date |
|---|---|---|---|
| US 2021294944 A1 | 23-09-2021 | CN 114930303 A | 19-08-2022 |
| | | DE 112021000213 T5 | 08-09-2022 |
| | | US 2021294944 A1 | 23-09-2021 |
| | | WO 2021189011 A1 | 23-09-2021 |
| US 2022405643 A1 | 22-12-2022 | CA 3162812 A1 | 11-12-2022 |
| | | US 2022405643 A1 | 22-12-2022 |

EPO FORM P0459

For more details about this annex : see Official Journal of the European Patent Office, No. 12/82